# EUROPÄISCHE PATENTANMELDUNG

(11) **EP 0 927 512 A1**
(43) Veröffentlichungstag der Anmeldung: **07.07.1999**
(21) Anmeldenummer: 98123618.5
(22) Anmeldetag: 10.12.1998
(51) Int. Cl.: A01F 12/24

(54) **Segment eines Dreschkorbs, Dreschkorb und Mähdrescher**

(30) Priorität: 03.01.1998 US 2576
(71) Anmelder: Deere & Company, Moline, Illinois 61265-8098 (US)
(72) Erfinder: Heely, Jason M., Lincoln, Kansas 67455 (US); Story, Joseph E., Green Top, Missouri 63546 (US)
(74) Vertreter: Magin, Ludwig Bernhard

(57) **Zusammenfassung**

Segment eines Dreschkorbs mit einem Sieb und dieses aufnehmende Tragelemente, Dreschkorb mit wenigstens einem solchen Segment und Mähdrescher mit einem solchen Dreschkorb.

Ein Segment (31) eines Dreschkorbs (11) ist aus Tragelementen (35, 37, 39) und einem Sieb (41) zusammengesetzt und weist wenigstens einen Riegel auf, der zum Erreichen einer formschlüssigen Verbindung mit Rahmenteilen (15, 27) des Dreschkorbs ausgebildet ist. Die Riegel weisen Hebel (49, 71) auf, mit deren Hilfe Formschlußteile (55, 73) bewegbar sind.

## Beschreibung

Die Erfindung betrifft ein Segment eines Dreschkorbs mit einem Sieb und dieses aufnehmende Tragelemente, einen Dreschkorb mit wenigstens einem solchen Segment und einen Mähdrescher mit einem solchen Dreschkorb.

Die FR-B-2 062 267 offenbart einen Axialdruschmähdrescher mit einem Dreschkorb, der in seinem Bodenbereich mit Abscheidesegmenten verschlossen wird. Die Segmente enthalten bogenförmig verlaufende Stäbe und diese endseitig miteinander verbindende winkelförmige Befestigungsstege. Während einer der Befestigungsstege in eine Nut eingesetzt wird, wird der andere Befestigungssteg angeschraubt.

Aus der US-A-4,499,908 geht ebenfalls ein Axialdruschmähdrescher mit einem Dreschkorb und Abscheidesegmenten hervor, die allerdings einenends in einem Scharnier gelenkig aufgenommen sind. Anderenends werden die Abscheideelemente wiederum mit Schrauben gesichert.

Die EP-A1-0 396 968 zeigt und beschreibt einen Mähdrescher in konventioneller Bauweise mit einem Dreschkorb mit tangentialer Gutbewegung, der drei Abscheidesegmente enthält. Jedes der Abscheidesegmente enthält eine Abscheidefläche und rechtwinklig zu dieser verlaufende Stege zum tragen der Abscheidefläche. Die Abscheidesegmente stützen sich auf Wangen eines Dreschkorbrahmens ab und werden einenends in einem U-Profil gehalten und anderenends mit einer Leiste und Schrauben gesichert.

Das der Erfindung zugrunde liegende Problem wird darin gesehen, daß die Abscheidesegmente schwierig auszutauschen sind.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise ist kein Werkzeug erforderlich, um das Segment aus der Verbindung mit dem Dreschkorb zu lösen. Vielmehr kann mittels der Betätigung einfacher Hebel das Segment von dem Dreschkorb gelöst werden. Das Lösen evtl. unter dem Einfluß von Gärsäften korrodierter Schrauben entfällt.

Ein einfaches Einfügen des Segments in den Dreschkorb wird durch die Verwendung beweglicher Riegel einerseits und starrer, d. h. ortsfester an der Anschlußstelle eines Tragelements vorgesehener Formschlußelemente erreicht, wobei letztere aus Ausnehmungen einerseits und Vorsprüngen andererseits bestehen können.

Um zu vermeiden, daß sich die Hebel des oder der Riegel(s) während des rauhen und erschütterungsbeladenen Betriebs lösen, ist bzw. sind Sicherungen, z. B. in der Art von Klappsteckern, Federsplinten oder dergl. vorgesehen.

Eine schräge Ausbildung der Formschlußteile, z. B. durch eine Keilform, durch eine trapezförmige Ausbildung oder durch einseitig angebrachte Schrägen macht es möglich, bei dem Verriegelungsvorgang eine zusätzliche Bewegung zu erzeugen, die die Haltekraft erhöht oder den Einbauvorgang erleichtert.

Eine Möglichkeit, die Formschlußteile in Eingriff mit den Rahmenteilen des Dreschkorbs zu bringen besteht darin, sie z. B. in der Art eines Gewindebolzens aufgrund einer Schwenkbewegung axial zu verschieben. In diesem Fall reicht eine geringe Hebellänge aus, da eine große Kräfteübersetzung vorliegt.

Wenn die Länge des Segments einen ganzzahligen Teil eines Kreises ausmacht, kann mit einer bestimmten Anzahl an Segmenten ein Dreschkorb zu 360 Grad bedeckt werden.

Ein Anschlag an einem quer verlaufenden Tragelement des Segments erleichtert dessen Positionierung an dem Rahmenteil des Dreschkorbs und verhindert, daß es zu weit in den Innenraum des Dreschkorbs hingerät.

Ein mit derartigen Segmenten bestückter Dreschkkorb ist von einem einfachen, robusten und kostengünstigen Aufbau, da innerhalb eines Rahmenwerks nur die Segmente einzufügen und zu sichern sind, wodurch sich eine erhöhte Steifigkeit ergibt.

Die Verbindung der Formschlußteile mit dem Dreschkorb erfolgt durch Aussparungen oder Vorsprünge in dessen Rahmenteilen, so daß ein einfacher Formschluß erreichbar ist.

Die Verwendung des vorgenannten Dreschkorbs und der Segmente bei einem Axialflußmähdrescher ist besonders vorteilhaft, weil ein solcher Dreschkorb einen Rotor zu 360 Grad umschließt und somit eine große zu bedeckende Fläche besitzt.

In der Zeichnung ist ein nachfolgend näher beschriebenes Ausführungsbeispiel der Erfindung dargestellt. Es zeigt:
- Fig. 1: einen Dreschkorb mit demontierbaren Segmenten in Draufsicht,
- Fig. 2: einen Schnitt durch den Dreschkorb und ein Segment in Seitenansicht, wobei das Segment bereits in dem Dreschkorb gesichert ist,
- Fig. 3: einen Schnitt durch den Dreschkorb und ein Segment in Seitenansicht, wobei das Segment einenends mit dem Dreschkorb formschlüssig verbunden ist, und
- Fig. 4: eine Vergrößerung eines Ausschnitts des Segments und des Dreschkorbs im Bereich eines Riegels.

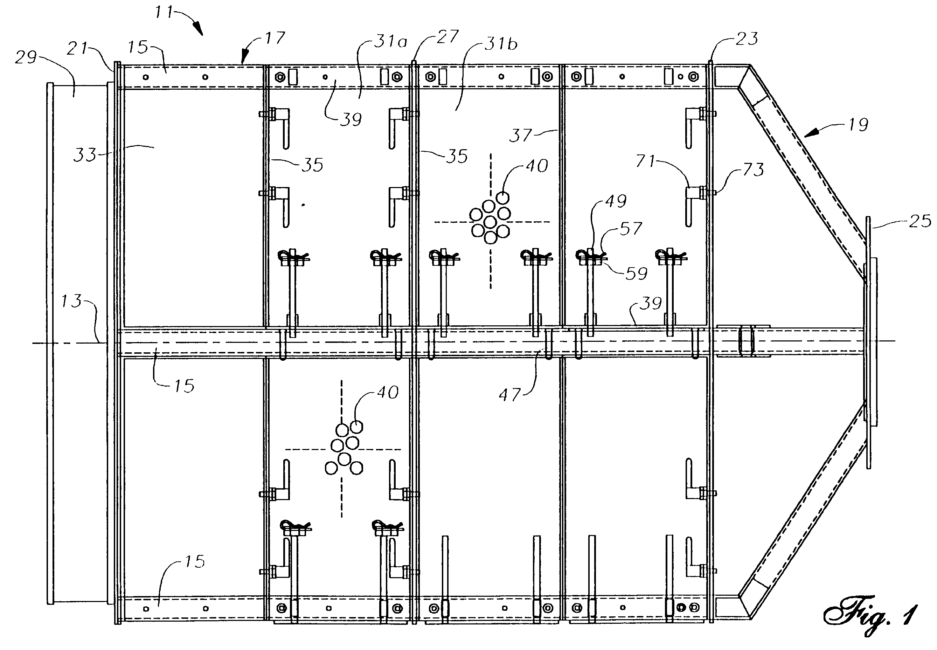

In Figur 1 ist ein Dreschkorb 11 für einen Mähdrescher gezeigt. Der Dreschkorb 11 besitzt eine Längsachse 13 und ist mittels vier symmetrisch beabstandeter Rahmenteile 15 abgestützt. Jeder Rahmenteil 15 ist aus quadratischem Stahlrohr gebildet. Jeder Rahmenteil 15 besitzt einen vorderen Bereich 17, der parallel zu der Längsachse 13 verläuft, und einen rückwärtigen Bereich 19, der sich radial nach innen und rückwärtig mit Bezug auf die Längsachse 13 erstreckt. Die Bereiche 17 und 19 jedes Rahmenteils 15 sind miteinander verschweißt. Eine vorderer Rahmenteil 21 in der Art einer Strebe oder eines Rings verbindet die vorderen Bereiche 17. Ein rückwärtiger Rahmenteil 23, ebenfalls in der Art einer Strebe oder eines Rings, verbindet die Rahmenteile 15 nahe der rückwärtigen Enden der vorderen Bereiche 17. Eine Platte 25 verbindet die rückwärtigen Enden der rückwärtigen Bereiche 19. Ein mittlerer Rahmenteil 27 in der Art einer Strebe oder eines Ring verbindet die Mittenbereiche der vorderen Bereiche 17. Schließlich erstreckt sich ein zylindrischer Ring 29 von der dem Rahmenteil 21 aus nach vorne.

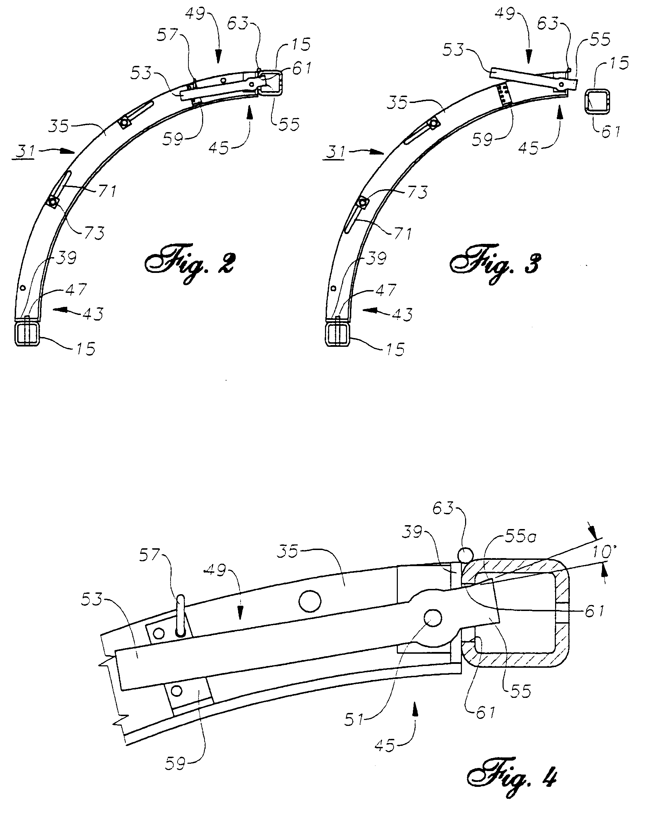

Der Dreschkorb 11 hat eine im allgemeinen zylindrische Erscheinung, die von einer Vielzahl plattenartiger demontierbarer Segmente 31 und permanenter Segmente 33 erbracht wird. Wie es in Figur 2 gezeigt ist, ist jedes Segment 31 auf einem halbkreisförmigen, ca. 90 Grad umspannenden Bogen gebogen, der sich zwischen benachbarten Rahmenteilen 15 erstreckt. Wenn die Segmente 31 zwischen jedem Paar benachbarter Rahmenteile 15 eingebaut sind, wird daher ein Zylinder von 360 Grad geformt. Figur 1 zeigt wiederum, daß in jedem Paar benachbarter Rahmenteile 15 zwischen deren vorderen Bereichen 17 drei Segmente eingebaut sind: ein kleines permanent eingebautes Segment 33 ist zwischen den vorderen Enden eingeschweißt, ein großes demontierbares Segment 31b ist zwischen deren rückwärtigen Enden und ein kleines demontierbares Segment 31a zwischen den Segmenten 33 und 31 b vorgesehen. Die Segmente 31a sind tatsächlich identisch mit den Segmenten 31b, mit Ausnahme ihrer axialen Abmessungen.

Jedes Segment 31 besitzt an jedem axialen Ende ein bogenförmiges, rippenartiges Tragelement 35, das eine bauliche Stütze erbringt. Lange Segmente 31b besitzen ein zusätzliches Tragelement 37 (Figur 1), das sich als zusätzliche Stütze zwischen den Tragelementen 35 befindet. Jedes Segment 31 besitzt auch ein Paar längsverlaufender Rippen oder Rahmenteile 39, die zum Erreichen einer größeren Steifigkeit die Tragelemente 35, 37 untereinander verbindet. Die Rahmenteile 39 verlaufen quer oder rechtwinklig zu den Rahmenteilen 35, 37, wodurch sie sich schneiden. Ein bogenförmiges perforiertes Sieb 41 erstreckt sich zwischen den längs verlaufenden Tragelementen 35, 37 und den quer verlaufenden Tragelementen 39. Die Siebe 41 besitzen eine große Anzahl von Perforationen oder Löchern 40, die sich durch diese hindurch erstrecken.

Gemäß Figur 2 besitzt jedes Segment 31 ein Positionierungsende 43 und ein Befestigungsende 45. Jedes Positionierungsende 43 besitzt eine Vielzahl von Löchern in seinem Tragelement 39, die eine gleiche Anzahl von Formschlußelemente 47 in der Art von Festlegebolzen, die sich von den benachbarten Rahmenteilen 15 aus erstrecken, diese aufnehmen und zu diesen ausgerichtet sind.

Gemäß Figur 4 besitzt das Befestigungsende 45 einen Riegel mit einem schwenkbar angebrachten Hebel 49 für das Segment 31. Der Hebel 49 schwenkt um eine sich axial erstreckende Gelenkachse 51, die nahe des Tragelements 39 auf dem Befestigungsende 45 angeordnet ist. Der Hebel 49 besitzt einen langen, manuell bedienbaren Griff 53 an einem Ende und einen kurzen Bolzen oder Formschlußteil 55, der einstückig ausgebildet ist, an seinem gegenüberliegenden Ende. Ein Ende 55a des Formschlußteils 55 verläuft mit einer Schräge von 10 Grad, so daß sein entferntes Ende dicker ist, als sein nahegelegenes Ende. Der Hebel 49 kann in einer Verriegelungsstellung (Figuren 1, 2 und 4) gesichert werden, indem der Griff 53 nahe zu dem Sieb 41 bewegt und eine Sicherung 57 in der Art einer Klammer in einen Hebelhalter 59 eingesetzt wird. Der Hebel 49 kann in eine ungesicherte Stellung (Figur 3) geschwenkt werden, indem die Sicherung 57 von dem Hebelhalter 59 entfernt und der Griff 53 von dem Sieb 41 wegbewegt wird. Wenn sich der Hebel 49 in seiner gesicherten Stellung befindet, greift der Formschlußteil 55 in eine passende Ausnehmung 61 in der Art eines Schlitzes in dem nahegelegenen Rahmenteil 15 ein. Die Ausnehmungen 61 befinden sich auf den den Formschlußelementen 47 gegenüberliegenden Seiten der viereckgien Rahmenteile 15. In der gesicherten Stellung zwingt der Formschlußteil 55 das Positionierungsende 43 gegen den seinen naheliegenden Rahmenteil 15 und das Befestigungsende 45 gegen den ihm naheliegenden Rahmenteil 15, wodurch die gesamte Steifigkeit des Dreschkorbs 11 erhöht wird. In der ungesicherten Stellung schwenkt der Formschlußteil 55 aus dem Eingriff mit der Aussparung 61, so daß dieses Segment 31 von dem Dreschkorb 11 entfernt werden kann. Ein Absatz oder Anschlag 63 für das Segment 31 erstreckt sich axial entlang einer radial außenliegen Kante jedes Befestigungsendes 45. Der Anschlag 63 liegt an dem Rahmenteil 15 an.

Jedes Segment 31 besitzt auch mehrere Riegel mit Hebeln 71 für die seitlichen Bögen. Die Riegel mit den Hebeln 71 befinden sich auf den Tragelementen 35 und sind als zweitrangige Verstärkungssicherungen für die Segmente 31 vorgesehen. Gemäß den Figuren 2 und 3 können die Riegel gesicherte bzw. ungesicherte Stellungen einnehmen. Jeder Riegel verbindet bzw. trennt schwenkbar einen angrenzenden Rahmenaufbau mit einem axial beweglichen Formschlußteil 73 in der Art eines Stiftes. Wenn die Hebel 71 in ihre gesicherte Stellung (Figur 2) gedreht werden, werden die Formschlußteile 73 aus ihren Tragelementen 35 axial nach außen bewegt, um in passende Löcher (nicht gezeigt) in den angrenzenden Rahmenteilen einzugreifen. Wenn die Hebel 71 um 180 Grad in ihre ungesicherte Stellung (Figur 3) gedreht werden, ziehen sich die Formschlußteile 73 in die Tragelemente 35 zurück, um außer Eingriff mit den zugehörigen Rahmenteilen bzw. den Löchern zu geraten. Beispielsweise hat jedes Segment 31b zwei Riegel bzw. Hebel 71 auf ihrem rückwärtigen Tragelement 35, die in den rückwärtigen Rahmenteil 23 eingreifen. Jedes Segment 31a besitzt zwei Riegel mit Hebeln 71 in jedem seiner Tragelemente 35. Die Formschlußteile 73 jedes Hebels 71 in dem vorderen Tragelement 35 jedes Segments 31a greifen in das rückwärtige Tragelement 35 eines benachbarten permanenten Segments 33 ein. Die Formschlußteile 73 jedes Riegels bzw. Hebels 71 in dem rückwärtigen Tragelement 35 jedes Segments 31a greifen in den zentralen Rahmenteil 27 oder Ring und das vordere Tragelement 35 eines benachbarten Segments 31b ein.

Im Betrieb werden die Segmente 31b vor den Segmenten 31a eingebaut. Jedes Segment 31b wird eingebaut, indem zuerst die Löcher in dem Positionierungsende 43 auf den Formschlußelementen 47 eines Rahmenteils 15 (Figur 3) angeordnet werden. Das Segment 31b wird dann um die Formschlußelemente 47 zu dem nahegelegenen Rahmenteil 15 geschwenkt, wobei sich die Hebel 49 und die Hebel 71 bzw. die von ihnen gebildeten Riegel in einer ungesicherten Stellung befinden. Wenn das Segment 31b an dem benachbarten Rahmenteil 15 anschlägt, hilft der Anschlag 63 bei der korrekten Ausrichtung des Segments 31b (Figur 4). Dann wird jeder Hebel 49 in eine gesicherte Stellung gebracht, so daß die Formschlußteile 55 in die Aussparungen 61 eingreifen. Die Sicherungen 57 werden in die Hebelhalter 59 eingesetzt, um zu verhindern, daß sich die Hebel 49 lösen. Nachdem die Hebel 49 gesichert sind, wird jeder Hebel 71 in die gesicherte Stellung (Figur 2) bewegt. Dieses Verfahren wird dann für jedes Segment 31b wiederholt. Nachdem die Segmente 31b eingebaut sind, kann jedes Segment 31a in derselben Weise eingebaut werden.

Die Erfindung hat mehrere Vorteile. Die demontierbaren Segmente 31 erlauben es, den Dreschkorb 11 eines Mähdreschers schnell an verschiedene Arten von Getreide anzupassen. Die Segmente 31 ermöglichen auch einen leichteren Zugang zu dem Dreschrotor innerhalb des Dreschkorbs 11. Zudem machen es die demontierbaren Segmente 31 einfacher, Erntegut aus dem perforierten Sieb 41 zu entfernen. Schließlich muß im Falle eines beschädigten Siebs 41 nur dasjenige Segment 31 ausgetauscht or repariert werden, das das beschädigte Sieb 41 enthält. Dieser letzte Vorteil erlaubt es, ein Ersatzsegment anstelle des beschädigten einzusetzen, so daß der Mähdrescher weiterhin benutzt werden kann.

## Patentansprüche

1. Segment (31) eines Dreschkorbs (11) mit einem Sieb (41) und dieses aufnehmende Tragelemente (35, 37, 39), gekennzeichnet durch hebelbetätigbare Riegel an den Tragelementen (35, 37, 39) mit beweglichen Formschlußteilen (55, 73).

2. Segment nach Anspruch 1 gekennzeichnet durch längs und quer verlaufende Tragelemente (35, 37, 39) wobei ein Teil der Riegel in oder an wenigstens einem der quer verlaufenden Tragelemente (39) vorgesehen ist, während in oder an einem anderen quer verlaufenden Tragelement (39) wenigstens ein ortsfestes Formschlußelement (47) vorgesehen ist.

3. Segment nach Anspruch 1 oder 2, dadurch gekennzeichnet, daß wenigstens ein Riegel einen Hebel (49) aufweist, der mittels einer Sicherung (57) in einer verriegelnden Stellung festlegbar ist.

4. Segment nach einem oder mehreren der vorherigen Ansprüche, dadurch gekennzeichnet, daß die Formschlußteile (55) bereichsweise schräg verlaufen.

5. Segment nach einem oder mehreren der vorherigen Ansprüche, dadurch gekennzeichnet, daß die Formschlußteile (73) als bewegliche Stifte ausgebildet sind, die mittels einer Drehbewegung eines Hebels (71) axial verstellbar sind.

6. Segment nach einem oder mehreren der vorherigen Ansprüche, gekennzeichnet durch einen bogenförmigen Verlauf in der Längsrichtung und eine Bogenlänge, die einen ganzzahligen Teil eines Kreises darstellt.

7. Segment nach einem oder mehreren der vorherigen Ansprüche, gekennzeichnet durch einen Anschlag (63) an einem quer verlaufenden Tragelement (39).

8. Dreschkorb (11) mit Rahmenteilen (15, 27) und mit Segmenten (31) nach einem oder mehreren der Patentansprüche 1 bis 7 zum Ausfüllen von Öffnungen zwischen den Rahmenteilen (15, 27).

9. Dreschkorb nach Anspruch 8, dadurch gekennzeichnet, daß die Rahmenteile (15, 27) Aussparungen (61) zur Aufnahme der Formschlußelemente (55) und Formschlußelemente (47) zum Eindringen in Aussparungen in den Tragelementen (39) aufweisen.

10. Mähdrescher mit einem Dreschkorb (11) nach Anspruch 8 oder 9, der für einen Axialdruschprozeß ausgebildet ist.
